**Europäisches Patentamt**

(19) **European Patent Office**

**Office européen des brevets**

(11) Veröffentlichungsnummer: **0 156 861**

**B1**

(12) # EUROPÄISCHE PATENTSCHRIFT

(45) Veröffentlichungstag der Patentschrift:
20.07.88

(51) Int. Cl.⁴: **B 60 K 20/02, B 60 K 20/10**

(21) Anmeldenummer: **84903533.2**

(22) Anmeldetag: **12.09.84**

(86) Internationale Anmeldenummer:
**PCT/DE 84/00193**

(87) Internationale Veröffentlichungsnummer:
**WO 85/01254 (28.03.85 Gazette 85/08)**

(54) SCHALTVORRICHTUNG FÜR EIN HANDSCHALTGETRIEBE FÜR KRAFTFAHRZEUGE.

(30) Priorität: **14.09.83 DE 3333216**

(43) Veröffentlichungstag der Anmeldung:
**09.10.85 Patentblatt 85/41**

(45) Bekanntmachung des Hinweises auf die Patenterteilung:
**20.07.88 Patentblatt 88/29**

(84) Benannte Vertragsstaaten:
**DE FR GB NL SE**

(56) Entgegenhaltungen:
**DE-A-2 952 204**
**DE-A-3 011 131**
**DE-B-1 081 317**
**FR-A-2 348 077**

(73) Patentinhaber: **ZWN ZAHNRADWERK NEUENSTEIN GMBH & CO., Hermann-Hagenmeyer- Strasse, D-7113 Neuenstein (DE)**

(72) Erfinder: **MÜLLER, Erich, R., Hohe Str. 15, D-7110 Öhringen- Cappel (DE)**
Erfinder: **VOLKERT, Edmund, Steppachweg 77, D-7107 Neckarsulm (DE)**

(74) Vertreter: **Witte, Alexander, Dr.- Ing., Schickhardtstrasse 24, D-7000 Stuttgart 1 (DE)**

## Beschreibung

Die Erfindung bezieht sich auf eine Schaltvorrichtung der im Oberbegriff des Anspruchs 1 angegebenen Art.

Bei einer bekannten Schaltvorrichtung dieser Art (DE-A-3 011 131) wird in üblicher Weise die Übertragung der Schaltbewegung von dem Handschalthebel auf die Schaltstange auf mechanischem Wege vorgenommen, was zur Folge hat, daß Bewegungen des Getriebes auf den Handschalthebel übertragen werden und auch eine Körperschallübertragung von dem Getriebe auf die Karosserie stattfindet.

Der Erfindung liegt die Aufgabe zugrunde, eine Schaltvorrichtung der angegebenen Art zu schaffen, bei der die Übertragung von Bewegungen des Getriebes auf den Handschalthebel vermieden ist, jedoch das Schaltgefühl, die Schaltzeiten und die Schaltsicherheit gegenüber den üblichen mechanischen Schaltvorrichtungen nicht beeinträchtigt ist.

Diese Aufgabe wird erfindungsgemäß durch die im Kennzeichen des Anspruchs 1 angegebenen Merkmale gelöst.

Bei dem erfindungsgemäßen Vorschlag wird aufgrund der nichtmechanischen Übertragung der Schaltbewegung von dem Handschalthebel auf die Schaltstange eine Entkoppelung zwischen diesen Bauteilen erreicht, durch welche jede Schwingungsübertragung unterbunden wird. Durch den zweistufigen Schaltvorgang wird jedoch trotz des Fehlens einer mechanischen Verbindung zwischen Handschalthebel und Schaltstange das übliche Schaltgefühl beibehalten, da erst nach erfolgter Rückmeldung, daß alle zum Einrücken der gewählten Gangstufe erforderlichen Voraussetzungen vorliegen, der Handschalthebel von der ersten in die zweite Stufe bewegt werden kann. Die Übertragung der Schaltbewegung kann dabei auf elektrischem, elektrohydraulischem oder elektropneumatischem Weg erfolgen.

Bei der Schaltvorrichtung gemäß der DE-A-3 011 131 ist bereits eine Sperrvorrichtung vorgesehen, die Fehlschaltungen z. B. von dem 5. in den 3. Gang und umgekehrt, dadurch vermeiden soll, daß für eine gewisse Zeit nach dem Ausrücken des Handschalthebels aus der betreffenden Schaltgasse ein Sperrbolzen das Einlegen des anderen Ganges verhindert, so daß ein schnelles Schalten, das zu Fehlschaltungen führen kann, nicht möglich ist. Durch die Sperrvorrichtung wird außerdem die Anwahl des Rückwärtsganges erst dann ermöglicht, wenn die Sperrmittel durch eine zum Einlegen des Rückwärtsganges vorgeschriebene besondere Betätigung des Handschalthebels und nach Ausrücken der Kupplung ausgerückt sind. Die Voraussetzungen für ein einwandfreies Schalten aller Gänge sind damit jedoch noch nicht gegeben, da es auch nach Ablauf der vorbestimmten Zeit zu Fehlschaltungen kommen kann und ein Einlegen des Rückwärtsganges auch bei sich noch in in Vorwärtsfahrtrichung drehenden Fahrzeugrädern möglich ist.

Ferner ist aus der DE-B-1 081 317 eine Schaltsperre für Zahnradwechselgetriebe gegen Überdrehen einer Fahrzeug-Brennkraftmaschine bekannt, bei der ein Herunterschalten in einen niedrigeren Gang durch einen Fliehkraftregler so lange verhindert wird, bis die Maschinendrehzahl auf einen bestimmten Wert gefallen ist. Das Einlegen der einzelnen Gänge auch dann, wenn die Voraussetzungen hierfür nicht gegeben sind, wird durch diese Schaltsperre nicht verhindert.

Vorteilhafte Ausgestaltungen der Erfindung ergeben sich aus den Unteransprüchen.

Ein Ausführungsbeispiel der Erfindung wird im folgenden unter Bezugnahme auf die Zeichnungen beschrieben. Es zeigt:

Fig. 1 eine schematische Darstellung eines Kraftfahrzeug-Triebwerkes, und

Fig. 2 eine Schaltkulisse mit einer Sperrvorrichtung für den Handschalthebel.

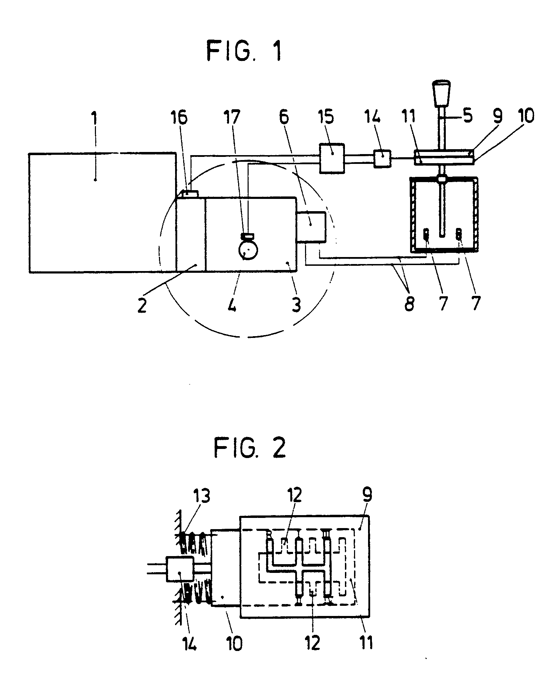

In Fig 1 ist mit 1 der Fahrzeugmotor bezeichnet, der über eine ausrückbare Kupplung 2 und ein Schaltgetriebe 3 die Antriebswelle 4 des Fahrzeuges antreibt. Die Gangstufen des Schaltgetriebes 3 werden durch einen Handschalthebel 5 eingelegt, der über ein elektrische, hydraulisches oder pneumatisches Schaltgerät 6 die übliche, nicht gezeigte, drehbare und verschiebbare Schaltstange im Getriebe 3 betätigt. Das Schaltgerät 6 ist mit entsprechenden Einrichtungen versehen, um die Schaltstange entsprechend der gewählten Gangstufe zu verschieben und zu drehen. Das Schaltgerät 6 erhält die entsprechenden Signale auf elektrischem Weg durch Kontakte 7, die von dem Schalthebel 5 betätigt werden und durch Leitungen 8 mit dem Schaltgerät 6 in Verbindung stehen. In Fig. 1 sind nur die dem ersten und dem zweiten Gang zugeordneten Kontakte dargestellt. Selbstverständlich sind der übrigen Gangstufen entsprechende Kontakte zugeordnet, auf die der Schalthebel 5 bei seiner durch die Schaltkulisse 9 vorgegebenen Bewegung wirken kann.

Um ein Einlegen eines Ganges nur dann zu ermöglichen, wenn die Kupplung 2 ausgerückt ist, ist eine Sperrvorrichtung 10 vorgesehen, die verhindert, daß der Schalthebel 5 in eine den entsprechenden Kontakt 7 betätigende Endstellung gelangen kann, wenn die Kupplung nicht vollständig ausgerückt ist. Diese Sperrvorrichtung besteht im Ausführungsbeispiel aus einer unter der Schaltkulisse 9 verschiebbar angeordneten Platte 11, die ähnliche Schlitze 12 wie die Schaltkulisse 9 aufweist. Diese Schlitze 12 sind jedoch, wie aus Fig. 2 ersichtlich, in den Schaltgassen R, I-II unf III-IV etwas kürzer als die entsprechenden Schlitze in der Schaltkulisse 9, so daß in der in Fig. 2 dargestellten Stellung der Platte 11 der Schalthebel 5 zwar in die betreffende Schaltgasse eingeführt, aber nicht bis zu seiner Endstellung, in der er den betreffenden Kontakt 7 betätigt, geführt werden kann. Erst wenn die Platte 10 entgegen der Wirkung einer Feder 13 in Fig. 2 so weit nach links verschoben wurde, daß sich die Schlitze 12 mit den Schlitzen in der Schaltkulisse 9 decken, kann der Schalthebel 5 in seine Endstellung gebracht werden. Diese Verschiebung der Platte 11 erfolgt mit Hilfe eines Elektromagneten 14, der von einer elektrischen Steuereinrichtung 15 betätigt wird. Die Steuereinrichtung 15 steht mit einem Sensor 16 in Verbindung, der bei voll ausgerückter Kupplung 2 ein Signal gibt und die Steuereinrichtung 15 veranlaßt, den Elektromagneten 14 zu erregen, so daß dieser die Platte 10 verschiebt und der Weg für den Schalthebel 5 freigegeben wird. Ein weiterer Sensor 17 stellt die Drehrichtung der Antriebswelle 4 fest und gibt ein entsprechendes Signal an die Steuereinrichtung 15, so daß das Einlegen des Rückwärtsganges verhindert wird, solange sich die Antriebswelle in Vorwärtsfahrtrichtung dreht. Dieses Signal kann auch in das Schaltgerät 6 eingegeben werden, um eine Verschiebung der Schaltstange in die Ebene der Schaltgasse des Rückwärtsganges zu verhindern.

Die Erfindung ist nicht auf das dargestellte Ausführungsbeispiel beschränkt. So können die Kräfte und Wege des Schaltgerätes 6 über hydromechanische oder pneumatische Bauelementeerzeugt werden, die von vorhandenen Hydro- oder Luftpumpen beaufschlagt werden. Anstelle einer Schaltstange zum Einlegen der einzelnen Gänge können jeder Gangstufe elektrische, pneumatische oder hydraulische Einrichtungen zugeordnet werden, die von dem Schalthebel 5 prinzipiell in der gleichen Weise betätigt werden wie vorstehend im Zusammenhang mit der Betätigung einer Schaltstange beschrieben. Auch können zusätzliche Sensoren, z. B. zur Feststellung des Gleichlaufs der Räder des einzulegenden Ganges, vorgesehen werden, die der Steuereinrichtung entsprechende Signale geben.

**Patentansprüche**

1. Schaltvorrichtung für ein Kraftfahrzeug-Handschaltgetriebe (3), das über eine ausrückbare Kupplung (2) mit dem Fahrzeugmotor (1) verbunden ist und mehrere Gangstufen aufweist, die durch eine drehbare und verschiebbare Schaltstange einlegbar sind, welche durch einen Handschalthebel (5) betätigbar ist, der aus einer Neutralstellung in Schaltstellungen für die einzelnen Gangstufen bewegbar ist, wobei eine Sperrvorrichtung (10) vorgesehen ist, welche das Einlegen eines Ganges durch den Handschalthebel von bestimmten Voraussetzungen, z. B. vom ausgerückten Zustand der Kupplung (2), abhängig macht, dadurch gekennzeichnet, daß die Übertragung der Schaltbewegung des Handschalthebels (5) auf die Schaltstange auf nichtmechanischem Weg erfolgt, daß die Bewegung des Handschalthebels (5) aus der Neutralstellung in eine Schaltstellung in zwei Stufen erfolgt, wobei die erste Stufe zum Vorwählen und die zweite Stufe zum Einlegen der gewählten Gangstufe dient, daß die Sperrvorrichtung (10) so beschaffen ist, daß sie eine Bewegung des Handschalthebels (5) von der ersten in die zweite Stufe erst dann zuläßt, wenn die für ein einwandfreies Einlegen der gewählten Gangstufe erforderlichen Voraussetzungen vorliegen, und daß eine Steuereinrichtung vorgesehen ist, welche die Eingangs- und Augangsdrehzahlen des Getriebes miteinander vergleicht und unter Berücksichtigung der Übersetzungsstufe der gewählten Gangstufe bei Gleichlauf der betreffenden Zahnräder ein Signal enzeugt, das die Sperrvorrichtung (10) im Sinne einer Freigabe des Handschalthebels (5) betätigt.

2. Schaltvorrichtung nach Anpruch 1, dadurch gekennzeichnet, daß ein die Drehrichtung der Fahrzeugräder feststellender Sensor (17) vorgesehen ist, der die Sperrvorrichtung (10) im Sinne einer Freigabe des Handschalthebels (5) zum Einlegen des Rückwärtsganges erst dann betätigt, wenn sich die Fahrzeugräder nicht in Vorwärtsfahrtrichtung drehen.

3. Schaltvorrichtung nach Anspruch 1 oder 2, dadurch gekennzeichnet, daß für jede Gangstufe ein am Ende der betreffenden Schaltbewegung des Handschalthebels (5) von diesem betätigter Kontakt (7) vorgesehen ist, der im Schaltkreis eines das Einlegen der betreffenden Gangstufe bewirkenden elektrischen Schaltelements angeordnet ist.

4. Schaltvorrichtung nach einem der Ansprüche 1 bis 4, dadurch gekennzeichnet, daß eine elektrische Steuereinheit (I5) vorgesehen ist, die Signale von Sensoren (16, 17) erhält, welche die Voraussetzungen für das einwandfreie Einlegen der gewählten Gangstufe, insbesondere die Kupplungsbetätigung, feststellen, und daß die Sperrvorrichtung einen Elektromagneten (14) aufweist, der von der Steuereinheit (15) gesteuert wird.

**Claims**

1. Gear shifting device for a motor-vehicle manual gearbox (3), which is connected by means of a disengageable clutch (2) to the vehicle engine (1) and has a plurality of gears, which can be engaged by a rotatable and displaceable gear shifting rod, which can be operated by a gear shifting lever (5), which can be moved from a neutral position into gear shifting positions for the individual gears, a locking device (10) being provided, which makes the engagement of a gear by the gear shifting lever dependent on certain conditions, for example on the disengaged state of the clutch (2), characterized in that the transfer of the shifting movement of the gear shifting lever (5) to the gear shifting rod is effected in a nonmechanical mode, in that the movement of the gear shifting lever (5) from the neutral position into a gear shifting position is carried out in two stages, the first stage providing for the preselection and the second stage for the engagement of the selected gear, in that the locking device (10) is designed in such a way that it only allows a movement of the gear shifting lever (5) from the first stage to the second stage when the required conditions for a satisfactory engagement of the selected gear are fulfilled, and in that a control device is provided, which compares the input and output speeds of the gearbox with one another and, taking into account the transmission stage of the selected gear, generates a signal which operates the locking device (10) to the effect of releasing the gear shifting lever (5), if the pinions concerned are synchronized.

2. Gear shifting device according to Claim 1, characterized in that a sensor (17) is provided, which determines the direction of rotation of the vehicle wheels and only operates the locking device (10) with the effect of releasing the gear shifting lever (5) for the engagement of reverse gear if the vehicle wheels are not turning in forward travelling direction.

3. Gear shifting device according to Claim 1 or 2, characterized in that, for each gear, a contact (7) operated by the gear shifting lever (5) at the end of the respective shifting movement of said lever is provided, which contact is arranged in the circuit of an electric switching element effecting the engagement of the gear concerned.

4. Gear shifting device according to one of Claims 1 to 4, characterized in that an electric control unit (15) is provided, which receives signals from sensors (16, 17) which determine the conditions for the satisfactory engagement of the selected gear, in particular clutch operation, and in that the locking device has an electromagnet (14) which is controlled by the control unit (15).

**Revendications**

1. Dispositif de changement de vitesse pour une boite de vitesse manuelle (3) pour véhicule automobile, qui est relié au moteur (1) du véhicule par un embrayage débrayable (2) et présente plusieurs vitesses, qui peuvent être enclanchées par une tringle de changement de vitesse, qu'on peut actionner par un levier de changement de vitesse (5), qu'on peut déplacer à partir d'une position neutre dans des positions correspondant à chacune des vitesses, dispositif dans lequel est prévu un dispositif de verrouillage (10), qui rend le passage d'une vitesse à l'aide du levier de changement de vitesse dépendant de certaines contraintes, par exemple de l'état débrayé de l'embrayage (2), caractérisé en ce que la transmission du mouvement de changement du levier de changement manuel (5) sur la tringle de changement s'effectué de manière non mécanique, que le mouvement du levier de changement manuel (5) à partir de la position neutre vers une position de vitesse s'effectue en deux étapes, la première servant pour la présélection et la seconde pour l'enclenchement de la vitesse choisie, que le dispositif de verrouillage (10) est tel qu'il ne permet un mouvement du levier de changement (5) de la première à la seconde étape que lorsque les conditions nécessaires existent pour le passage parfait de la vitesse choisie et qu'est prévu un dispositif de commande qui compare la vitesse de rotation d'enclenchement et de dégagement de la boite de vitesse et, en fonction de l'étape de transmission de la vitesse choisie lors du synchronisme des roues dentées concernées, produit un signal, qui actionne le dispositif de verrouillage (10) dans le sens d'un déverouillage du levier de changement manuel (5).

2. Dispositif de changement de vitesse selon la revendication 1, caractérisé en ce qu'est prévu un palpeur (17) reconnaissant la direction de rotation des roues du véhicule, qui n'actionne le dispositif de verrouillage (10) dans le sens d'un verrouillage du levier de changement manuel (5) pour le passage de la marche arrière que lorsque les roues du véhicule ne tournent pas vers l'avant.

3. Dispositif de changement de vitesse selon la revendication 1 ou 2, caractérisé en ce que, pour chaque vitesse est prévu un contact (7), à l'extrémité du mouvement de changement concerné du levier de changement manuel (5) actionné par ce contact, qui est disposé, dans le circuit de commutation, d'un élément de commutation électrique provoquant le passage de la vitesse choisie.

4. Dispositif de changement de vitesse, selon l'une des revendications 1 à 4, caractérisé en ce qu'est prévue une unité de commande électrique (15), qui reçoit les signaux des palpeurs (16, 17) qui reconnaissent les conditions pour le passage parfait de la vitesse choisie, en particulier l'actionnement de l'embrayage, et que le dispositif de verrouillage (10) présente un élecrto-aimant (14), qui est commandé par l'unité de commande (15).

FIG. 1

FIG. 2